# EUROPEAN PATENT SPECIFICATION

(11) **EP 3 334 883 B1**
(45) Date of publication and mention of the grant of the patent: **04.03.2020**
(21) Application number: 16750458.8
(22) Date of filing: 12.08.2016
(51) Int. Cl.: E05F 15/611, E05F 15/70, E05C 17/30

(54) **ASSISTANCE SYSTEM FOR VEHICLE DOOR**
SCHLIESS- UND ÖFFNUNGSHILFE EINER FAHRZEUGTÜR
SYSTÈME D'ASSISTANCE POUR PORTE DE VÉHICULE

(30) Priority: 14.08.2015 GB 201514434
(43) Date of publication of application: 20.06.2018
(73) Proprietor: Jaguar Land Rover Limited, Coventry, Warwickshire CV3 4LF (GB)
(72) Inventor: HARRIS, Brett, Coventry Warwickshire CV3 4LF (GB); LIDGARD, Brian, Coventry Warwickshire CV3 4LF (GB); WARBURTON, Andrew, Coventry Warwickshire CV3 4LF (GB)
(74) Representative: Westcott, Matthew John George
(86) International application number: PCT/EP2016/069268
(87) International publication number: WO 2017/029229

(56) References cited:
- EP-A1- 0 580 147
- WO-A1-2005/008007
- DE-A1-102007 062 473
- US-A1- 2013 144 495

## Description

### TECHNICAL FIELD

The present disclosure relates to a system for a vehicle door. Aspects of the invention relate to an assistance system for a door of a vehicle, to a method, to a controller, to a vertically hinged door for a vehicle, and to a vehicle.

### BACKGROUND OF THE INVENTION

It is known to provide vehicles with hinged rear doors, for example to provide access to a luggage space at the rear of the vehicle. Typically, such openings are provided with a hinge that is horizontal and located at the top of the rear door when the vehicle is on level ground. Alternative configurations are also known, for example a door that is vertically hinged at one edge, or a split tailgate comprising two cooperating doors, one being hinged at an upper edge of the opening and the other being hinged at a lower edge of the opening.

It is also known to provide horizontally hinged rear doors with power assist systems which aid the opening and closing of the doors. Such systems may provide improved convenience for a user of the vehicle, and they may improve accessibility for users who struggle to reach a door that is horizontally hinged at the top of the opening once it is fully open. This may be especially important for all-terrain vehicles such as SUVs, as they are typically relatively tall and may encounter greater variations in operating conditions than vehicles that are not designed for off-road use.

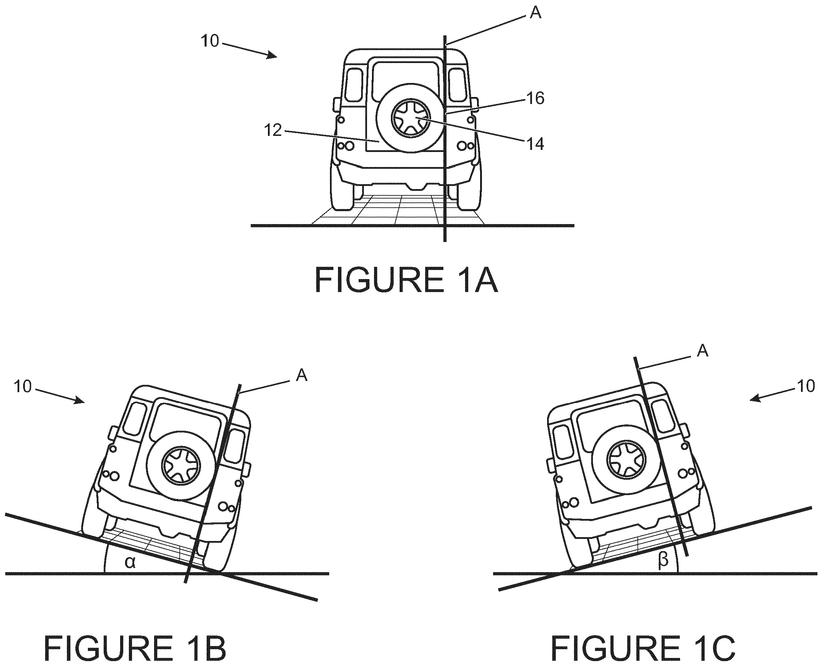

Figure 1a shows a prior art vehicle 10 having a vertically hinged door 12. Door 12 includes hinges 16 that allow the door to be opened by rotation about axis A, and spare wheel 14 is disposed upon rear door 12. Because of the inclusion of spare wheel 14, the overall mass of door 12 is relatively high, compared with that of vehicle rear doors that do not include a spare wheel. It is therefore generally advantageous that door 12 is vertically hinged rather than horizontally hinged, as the height of door 12 stays constant as it is opened and closed, thereby avoiding the need to do unnecessary work when opening or closing door 12. However, when the vehicle 10 is parked on non-level ground, as shown in figures 1b and 1c, it is no longer the case that the height of the door (relative to a horizontal datum) remains constant as it is opened and closed. In the configuration shown in figure 1b the vehicle is rotated by an angle α about the roll axis (i.e. an axis parallel to the normal direction of travel), and in figure 1c the vehicle is rotated about an angle β about the roll axis in the opposite direction to angle α. Additional work must therefore be done to open the door when the vehicle is in the configuration shown in figure 1c, and additional work must be done to close the door when the vehicle is in the configuration shown in figure 1b. Furthermore, when closing the door when the vehicle is in the configuration shown in figure 1a and opening the door when the vehicle is in the configuration shown in figure 1b the user may have to apply a force in the opposite direction to the movement of the door to prevent the door from opening or closing too fast. This may be inconvenient for users of the vehicle. Accordingly, it is an object of the present invention to provide systems for vertically-hinged doors that provides a controlled opening and closing of the doors.

The skilled person will understand that the variation in force due to gravity required to open or close a door as a function of the rotation about the roll axis of the vehicle is typically higher for a vertically-hinged door than it is for a horizontally-hinged door. This is because the change in height when opening a vertically-hinged door is approximately related to the sine of the angle (α, β) that the vehicle is rotated by about its roll axis, whereas the change in height of a horizontally-hinged door is approximately related to the cosine of the angle, which changes less rapidly for small angles (i.e. angles less than about 30 degrees). Furthermore, the skilled person will recognise that the force required to overcome gravity to open a horizontally-hinged door is at a maximum when the vehicle is parked on level ground, whereas the required force (or, more accurately, the absolute value of the required force) is at a minimum when the vehicle is parked on level ground for a vertically-hinged door. Accordingly, existing systems for providing powered opening and closing of horizontally-hinged doors of vehicles are not suitable for use with vertically-hinged doors, as they are not able to accommodate sufficient variation in the required force.

Although figure 1 and the above description only consider rotations of the vehicle about its roll axis, the skilled person will appreciate that a similar effect will exist for vehicles rotated about their pitch axis.

WO2005008007 describes a device for a vehicle door that operates to increase or decrease the resistance to movement of the vehicle door in dependence on data from sensors.

DE102007062473 describes a motor assisted vehicle door.

US2013/144495 relates to an assistance system for a vehicle door.

EP0580147 relates to a cylinder piston device provided as a positioning unit for a vehicle door.

### SUMMARY OF THE INVENTION

Aspects and embodiments of the invention provide a power system for a door of a vehicle, an assistance system for a door of a vehicle, a door, a method, a controller and a vehicle as claimed in the appended claims.

According to an aspect of the invention there is provided an assistance system for adjusting the force required to be provided by a user to open and/or close a vertically-hinged door of a vehicle, the system comprising:
at least one sensor configured to measure at least one vehicle parameter; and
an actuator configured to adjust the force required to open and/or close the door. Wherein, the at least one sensor comprises a mass sensor and the at least one vehicle parameter comprises the current mass of at least a portion of the door; and the system comprises a control means configured to control the actuator to adjust the force required to open and/or close the door in dependence on said vehicle parameter comprising the current mass of at least a portion of the door.

The ability to vary the amount of force required to be provided by the user enables the speed of the door to be controlled and enables the door to deliver the required latch entry force or controlled stop as opposed to an immediate stop. This improves the perceived opening and closing quality of operation.

Said control means may comprise a controller having a processor and electronic memory. The processor comprising software code, which when executed by the controller, configures the controller to control the actuator to adjust the force required to open the door in dependence on the vehicle parameter. The control means may comprise a non-transitory computer readable media.

In an embodiment the at least one sensor comprises a tilt sensor and the at least one vehicle parameter comprises a parameter relating to an orientation of the vehicle. Optionally, the parameter relating to an orientation of the vehicle may comprise an absolute value of the orientation of the vehicle about a roll axis and an absolute value of the orientation of the vehicle about a pitch axis. Advantageously, adjusting the force required to open the door in dependence on a parameter relating to the orientation of the vehicle prevents excessive force from being required when the orientation of the vehicle is such that the resultant force due to gravity acting on the door in the direction of movement is large.

Thus, the vehicle parameter may comprise both the current mass of at least a portion of the door and a parameter relating to the orientation of the vehicle. This allows the system to determine the force required to open the door in the absence of assistance from the actuator with improved accuracy, thereby allowing the system to control the force required to be provided by the user to open the door more accurately. This enables the system to account for changes in the mass of said door. The mass of the door may be varied by the user by, for example, having a spare-wheel fitted to the door or having door mounted accessories such as bike racks, ladders etc.

In an embodiment, the at least one sensor may comprise a position sensor and/or a velocity sensor and the at least one vehicle parameter may comprise the current angular velocity of the door. This allows the system to provide feedback control.

In an embodiment, the at least one sensor comprises a temperature sensor and the at least one vehicle parameter comprises the temperature external to the vehicle. This allows the system to account for the effect of environmental temperature on, for example, hydraulic components of the system.

In an embodiment, the at least one sensor comprises a vehicle speed sensor and the at least one vehicle parameter comprises the speed of the vehicle. This allows the system to account for the speed of the vehicle and adjust the force/torque provided by the actuator appropriately.

In some embodiments, the assistance system comprises one or more proximity sensors e.g. one or more cameras. On detection of an obstacle, the control means may be configured to control the actuator to perform one of the actions of stopping driving the door and bringing the door to rest, reducing the assistive force to the door such that moving the door in the direction of the obstacle requires more force to be provided by the user, or providing an assistive force in the opposite direction to the location of the obstacle in order to prevent or substantially reduce the risk of the door coming into contact with the obstacle.

In another embodiment, the actuator may comprise an adaptive damper and the controller may be configured to adjust the damping properties of said adaptive damper, thereby to adjust the force required to open and/or close the door. Accordingly, an assist system with adaptive damping may be provided.

Optionally, the adaptive damper comprises at least one valve, and the adjusting (i.e. changing) the damping properties of said adaptive damper is effected by at least partially opening or closing said valve.

In another embodiment, the adaptive damper comprises a damping fluid, which damping fluid may comprise a magnetorheological fluid, and the change in the damping properties of said adaptive damper may be effected by varying a magnetic field provided across at least a portion of a fluid passage of said adaptive damper. Use of a magnetorheological fluid allows the damping properties of the adaptive damper to be varied relatively rapidly.

The control means may be configured to increase the level of damping provided by said adaptive damper when the value of the parameter relating to an orientation of the vehicle indicates that the vehicle is on non-level ground. Alternatively or additionally, the control means may be configured to increase the damping provided by said adaptive damper when the current mass of at least a portion of the door exceeds a threshold value.

In another embodiment, the at least one sensor may comprise at least one force transducer disposed on a handle of the door, and the at least one vehicle parameter comprises a value of a force applied to the handle by a user of the vehicle. Advantageously, this embodiment allows adjustment to be provided when the force provided by the user approaches an excessive value, thereby to reduce a likelihood that a user needs to provide an excessive force.

In a further embodiment, the actuator may be configured to apply a force and/or a torque to the door, thereby to adjust the force required to open and/or close the door, and the control means may be configured to adjust the force and/or torque provided by the actuator in dependence on the value of the vehicle parameter. Accordingly, a power assist system with assistive force may be provided.

Optionally, the at least one vehicle parameter may further comprise at least one of a parameter relating to an orientation of the vehicle and a current mass of at least a portion of the door,
whereby the amount of force and/or torque provided by the actuator may be determined in dependence on the force applied to the handle by the user of the vehicle and at least one of the parameter relating to an orientation of the vehicle and the current mass of at least a portion of the door.

In an embodiment, the amount of force and/or torque applied by the actuator may be proportional to the force applied to the handle by the user, wherein the constant of proportionality may be determined in dependence on at least one of the parameter relating to an orientation of the vehicle and the current mass of at least a portion of the door. This embodiment allows the adjustment of the required force to be tuned to provide a consistent feel to the door irrespective of the orientation of the vehicle and the overall mass of the door.

According to another aspect of the present invention, there is provided a method of adjusting the force required to be provided by a user to open and/or close a vertically-hinged door of a vehicle, the method comprising:
measuring at least one vehicle parameter, said at least one vehicle parameter comprising the current mass of at least a portion of the door; and
controlling an actuator to adjust the force required to open the door in dependence on the vehicle parameter.

In an embodiment, the actuator may be configured to apply a force or torque to the door, thereby to adjust the force required to open and/or close the door. Optionally, the at least one vehicle parameter may comprise a value of a force applied to the handle by a user of the vehicle.

In another embodiment, the actuator may comprise an adaptive damper and the method may comprise changing the damping properties of the adaptive damper, thereby to adjust the force required to open and/or close the door.

The at least one vehicle parameter may comprise the mass of a portion of the door and a parameter relating to an orientation of the vehicle.

According to another aspect of the invention, there is provided a controller configured to implement a method as described above.

According to a further aspect of the invention, there is provided a vertically-hinged door for a vehicle comprising an assistance system as described above.

According to an aspect of the invention, there is provided a vehicle comprising an assistance system, a controller or a door as described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination, unless incompatible with the scope of the claims. That is, all embodiments and/or features of any embodiment can be combined in any way and/or combination, unless such features are incompatible with the scope of the claims.

### BRIEF DESCRIPTION OF THE DRAWINGS

One or more embodiments of the invention will now be described, by way of example only, with reference to the accompanying drawings, in which:
Figures 1a-1c show a vehicle with a vertically hinged door as known in the Prior Art, and which has already been discussed by way of background;
Figure 2 shows a schematic representation of a power system for opening and closing a vertically hinged door of a vehicle, in accordance with an embodiment of the present invention;
Figure 3 shows a drive curve graph relating an amount of current to be provided to an actuator to a door opening angle;
Figure 4 is a process flow chart illustrating a control sequence used to open a door having a power system as shown in figure 2;
Figure 5 shows a schematic representation of a power assist system with assistive force, in accordance with an embodiment of the present invention;
Figure 6a is a schematic perspective illustration of a handle for use with the power assist system shown in figure 5, and Figure 6b is a cross-sectional schematic illustration of the handle shown in Figure 6a;
Figure 7 shows a schematic illustration of an actuator for providing force to a vehicle door, in accordance with an embodiment of the present invention;
Figure 8 is a perspective schematic illustration of an assist system with adaptive damping, in accordance with an embodiment of the present invention;
Figure 9 is a cross section of an adaptive damper suitable for use with the assist system shown in Figure 7;
Figures 10a and 10b are rear views of a vehicle including a vertical hinged door comprising a novel handle arrangement, in accordance with an embodiment of the present invention;
Figure 11a shows a cross-sectional view of the vehicle door illustrated in Figures 10a and 10b; and Figure 11b shows a cross-sectional view of the door of Figure 11a taken on a plane that includes the handle arrangement illustrated in Figures 10a and 10b;
Figure 12 shows a magnetic spring arrangement suitable for use with the handle shown in cross-sectional view in Figure 11b;
Figure 13a is a plan view of a user opening the door of a prior art vehicle, and Figure 13b is a plan view of a user opening the door of a vehicle, in accordance with an embodiment of the present invention; And
Figure 14 is a schematic illustration of a hydraulic linear actuator suitable for use with any or all of the power system shown in Figure 2, the power assist system with assistive force shown in Figure 5 and the assist system with adaptive damping shown in Figure 8.

### DETAILED DESCRIPTION

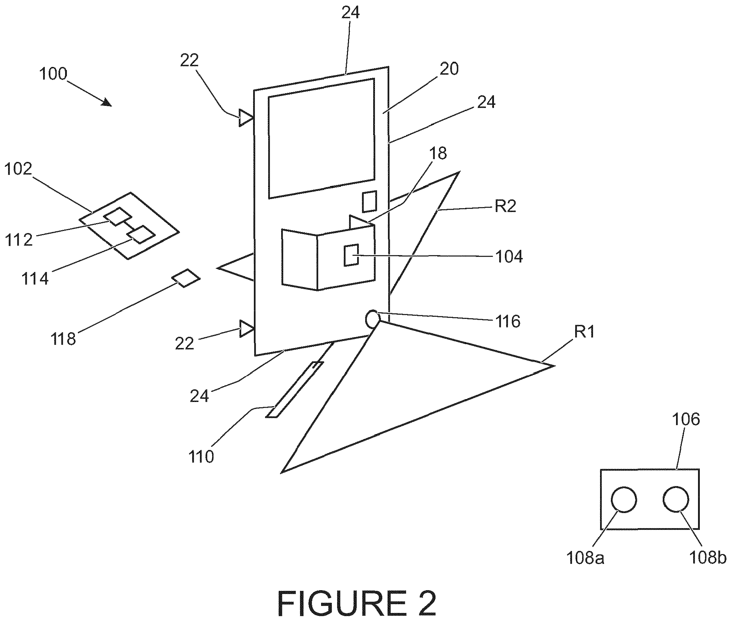

Systems for doors in accordance with embodiments of the present invention are described herein with reference to the accompanying figures 2-12 and 13b-14. Embodiments of the present invention relate to a power assist system and method therefor. However, to provide some context to the invention, a power door opening and closing system will first be described.

### Powered Door Opening and Closing System

Figure 2 shows a power system 100 for opening and closing a door 20, and in particular a door suitable for a vehicle, having vertical hinges 22 and spare wheel carrier 18. System 100 comprises an electronic control unit 102, an actuator 110, a mass sensor 104, a tilt sensor 118, two proximity sensors 116 mounted on opposite major faces of the door 20 (note that only the sensor for range R1 is visible in Figure 2, the proximity sensor 116 for range R2 is located on the opposite face of the door 2 and is obstructed from view in Figure 2) and a user interface 106.

The proximity sensors 116 may be ultrasonic sensors having a range of approximately 1.5m. Accordingly, the proximity sensors used may be similar to the sensors employed in a parking distance control system, and at least one of the proximity sensors may also be used as part of a parking distance control system when the powered opening and closing system of the present invention is not in operation. The skilled person will understand that other sensors, for example radar sensors or one or more cameras in conjunction with an image processing module, may be used in addition to or instead of ultrasonic sensors.

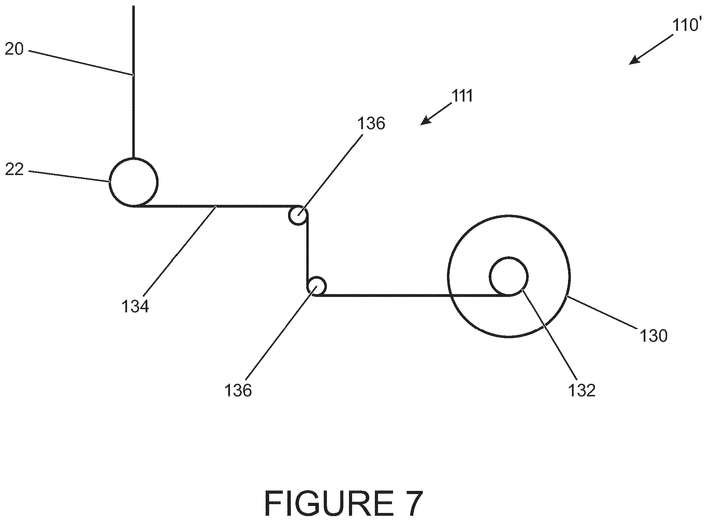

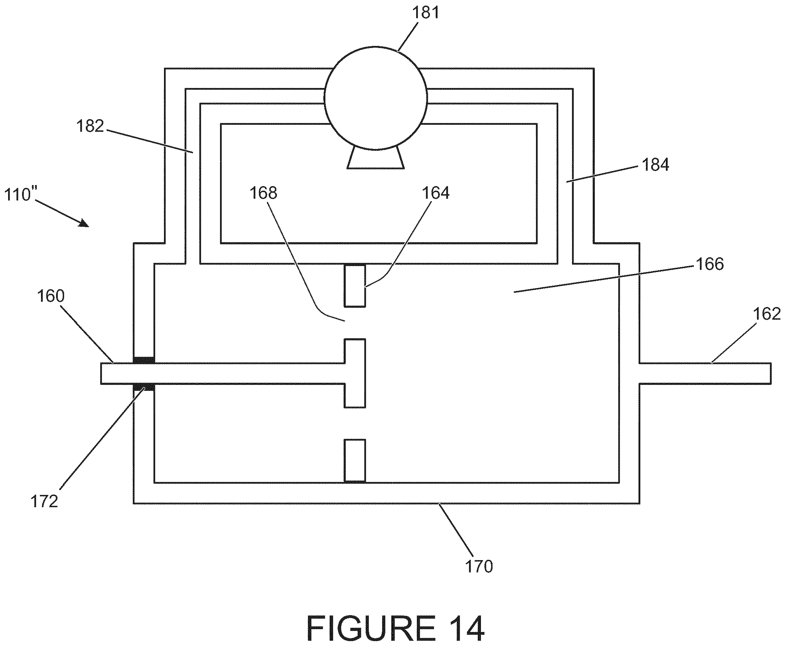

The control unit 102 comprises electronic memory 112, optionally a non-transitory computer readable media, in communication with a processor 114 and is configured to control actuator 110 to provide a variable drive to open or close door 20. In the illustrated example the actuator 110 is an electronic linear actuator configured to apply a force to door 20. The electronic linear actuator 110 may comprise a lead screw connected to an electric motor. In this case the actuator may be provided with a clutch arrangement that prevents the motor from being back-driven when the door is opened manually. An additional sensor, for example a Hall sensor, is provided within actuator 110 to measure the extension of the actuator, and therefore the angular position of the door 20 relative to the rest of the vehicle. However, the skilled person will understand that this is merely an illustration, and that various other types of actuator would also be suitable, including but not limited to one or more electric motors configured to apply a torque at the hinge, a hydraulic linear actuator configured to apply a force to the door, or a pulley system configured to apply a force to the door. If an actuator is provided that does not include a sensor that is able to directly or indirectly measure the position of the door 20 relative to the rest of the vehicle then a separate sensor (not shown) may be provided to measure the position of the door 20. Suitable actuators are described in more detail below, particularly with reference to figures 7 and 14.

User interface 106 is configured to receive an instruction from a user to open or close the door 20. In the illustrated example the user interface 106 comprises a key fob having one or more buttons 108a,b via which a user can provide an instruction to open or close the door by wirelessly transmitting a signal from the key fob 106 to the control unit 102. The wireless signal may be transmitted by various known methods, for example a short wave radio signal. Furthermore, the skilled person will understand that various other user interfaces would be suitable, including but not limited to one or more dedicated switches on the dashboard of the vehicle, one or more soft keys in a vehicle Human-Machine Interface (HMI), a voice command, or one or more switches on the inner and/or outer part of the door.

On receipt of an instruction to open or close the door 20 from user interface 106 the control unit 102 is configured to initiate a door opening or closing sequence. The door opening or closing sequence comprises checking for objects in the expected path of the door using the appropriate one of the proximity sensors 116. The expected path of the door is checked for obstacles before the door is initially moved, and is substantially continuously monitored while the door is being opened or closed. If an obstacle is detected in the expected path at any point before or during the opening or closing of the door the actuator 110 is controlled to bring the door to rest and to stop the sequence. Although the example shown in figure 2 has one proximity sensor 116 on each side of the door 20, the skilled person will understand that additional proximity sensors may also be provided on either side of the door.

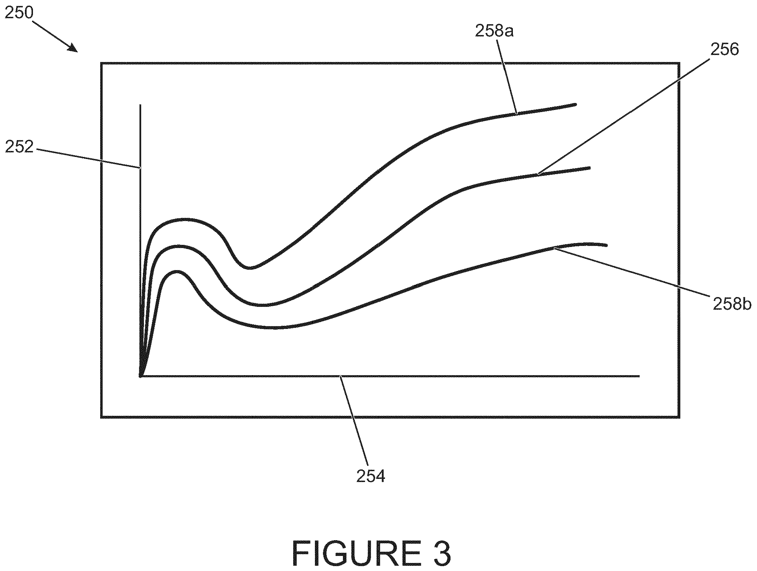

If no obstacles are detected in the expected path of the door then the control unit 102 is configured to control actuator 110 to provide an appropriate force to open or close the door 20. The appropriate force to be provided by the actuator is determined in dependence on the measured values of the orientation of the vehicle about its pitch and roll axes and the overall mass of the door 20. In the illustrated example the control unit 102 is configured to select a drive curve 250 based on the measured orientation of the vehicle and the overall mass of the door. A look up table relating the mass and orientation values to drive curves 250 may be stored in the electronic memory 112 or any other suitable memory device. An example of a drive curve 250, which relates the level of current to be provided to actuator 110 on the Y axis 252 to the door opening angle on the X axis 254, is shown in figure 3. As described above, the door opening angle may be measured by a sensor included in actuator 110, or by an additional sensor.

Current profile 256 shows the target, or ideal, current profile to be provided to actuator 110 to close door 20 as a function of the door opening angle. A similar current profile may be provided to open the door 20. Indeed, the current profile for opening the door may be the same as the current profile for closing the door, save that the direction of the current is reversed. The skilled person will understand that the electronic linear actuator 110 may be an actuator that provides a linear relationship between the current passing through the actuator and the force provided by the actuator. The current may be controlled by any appropriate means, for example pulse width modulation (PWM). Indeed, if PWM is employed then the Y axis may actually show duty cycle (i.e. the proportion of the time during which the current is switched on) rather than instantaneous current. Furthermore, since the relationship between current and force may be linear, the Y axis 252 could alternatively show the required force rather than the required current or duty cycle, with no significant change to the shape of curves 256, 258a, 258b. If actuator 110 is not an electronic linear actuator then the Y axis 252 could show a different parameter having a linear relationship with the force or torque applied to the door. For example, if a hydraulic actuator was provided then the Y axis 252 could show the pressure in the hydraulic fluid.

In addition to the target current profile 256, figure 3 also shows limit curves 258a,b, which show, respectively, the maximum and minimum current that may be provided to the actuator 110 as a function of the door opening angle. It is necessary to provide an allowable range within which the current may fall because under certain conditions the required level of drive may change, which may occur because of variations in the friction at hinges 22 or because of additional forces that may be applied to door 20, for example if it is operating in windy conditions. An additional source of uncertainty in the force required to open or close the door may arise if tilt sensor 118 is a sensor that is operable to detect the absolute value of the orientation about the roll and pitch axes but not the direction in which the vehicle is tilted, as is often the case for tilt sensors employed in vehicles. Accordingly, the limit curves 258a,b may be located relatively close to the target current profile 256 if the magnitude and direction of the orientation about the roll and pitch axes is known, but they may be further away if only the magnitude is known. The skilled person will understand that the selection of appropriate sensors may depend on various considerations, including the required accuracy and repeatability.

If the required current to move the door at a given opening angle falls outside the limit values then this may be indicative of an obstacle in the path of the door, or another abnormal operating condition. Accordingly, the control unit 102 is configured to immediately cease the automatic movement of the door if the required current is outside the limit values defined by profiles 258a,b. This may prevent or mitigate damage if the door collides with an object that has not been detected by proximity sensors 116 during opening or closing of the door.

If the tilt sensor is not able to detect the direction of changes in the orientation of the vehicle about its roll and pitch axes then the target current profile 256 may be set in dependence on the measured mass value without regard to the orientation of the vehicle, and the current limit profiles 258a,b may be set in dependence on the measured mass value and the orientation of the vehicle. For example, the target current profile 256 for a given mass value may be chosen so that when the vehicle is on level ground the door is caused to accelerate from rest at a target angular acceleration rate or within a target angular acceleration range until the door reaches an angular velocity within a target velocity range, at which point angular velocity of the door may stay within a target range until the door nears its final position. Accordingly the target movement of the door may comprise an acceleration phase, a steady phase and a deceleration phase. It will be understood that the deceleration phase may begin when the door nears or reaches its closed position, and the deceleration may be caused by contact between the door 20 and a stop (not shown) at the extreme end of the door's travel, and the controller may not be configured to maintain a target speed or acceleration during the deceleration phase. Indeed, during closing it may be beneficial for the door to have some residual momentum at the extreme end of its travel, as there may be some resistance to be overcome to ensure that the door latches and is therefore maintained in its closed position.

Current limit profiles 258a,b may be selected to take into account the maximum required force corresponding to that required if the orientation of the vehicle is such that the weight of the door acts to oppose the opening or closing of the door, and the minimum required force corresponding to that required if the orientation of the vehicle is such that the weight of the door acts to promote the opening or closing of the door. Accordingly, the target current profile 256 may show the current required to provide sufficient force or torque to overcome the frictional forces at the hinge and other losses and to move the door at the target acceleration rate for the given opening angle when the vehicle is on level ground. The upper limit curve 258a may take into account the same forces as current profile 256, and additionally account for the force or torque required to lift the door in the event that the orientation of the vehicle is such that the change in height is at a maximum in an upward direction. Similarly, lower limit curve 258b may take into account the same forces as current profile 256, and additionally account for the reduction in force or torque required in the event that the orientation of the vehicle is such that the change in height is at a maximum but in a downward direction. Limit curves 258a,b may also allow for a small additional variation in the required force or torque, to allow for normal variations in the operating conditions.

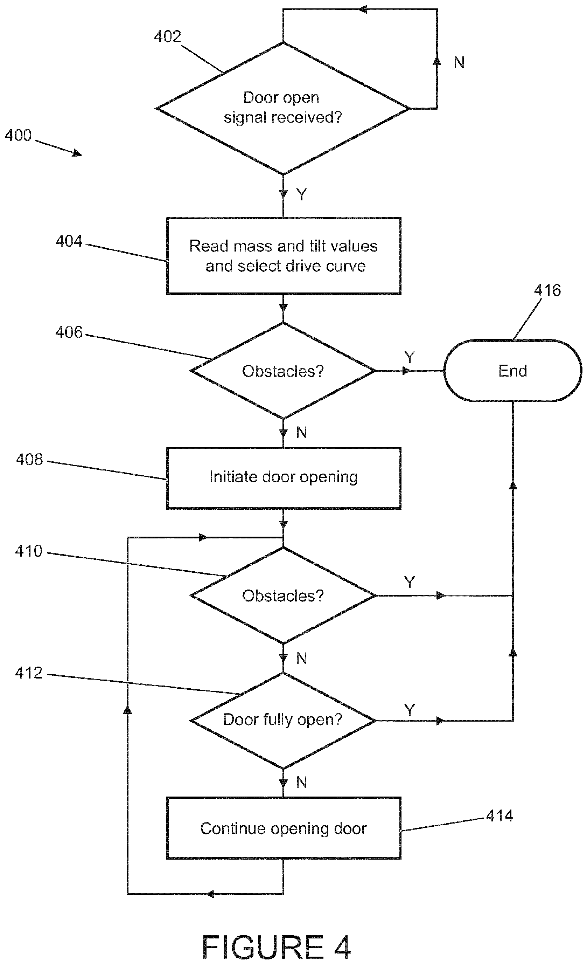

Figure 4 shows a door opening sequence 400 in accordance with an embodiment of the present invention. The opening sequence begins at step 402, at which point the control unit 102 waits to receive an "open" signal from user interface 106. It will be understood that the user interface may be provided with separate buttons 108a, 108b to initiate opening and closing of the door 20. Alternatively, a single button may be provided to open the door if it is currently closed and to close the door if it is currently open. In either event, the control unit may only initiate step 402 if the vehicle door is currently closed. Further conditions, for example the vehicle being stationary, may also be required to be met before the control unit begins the opening sequence 400.

If a door open signal is received at step 402 the sequence proceeds to step 404, in which the control unit reads the mass and tilt values from sensors 104, 118 respectively, and selects a drive curve 250 on the basis of the mass and tilt values. Once the drive curve is selected the control unit checks for obstacles at step 406 via proximity sensor 116, which is operable to detect objects in region R1. If an obstacle in the path of the door 20 is detected by proximity sensor 116 the sequence immediately ends at step 416 without opening the door. If no obstacles are detected the sequence proceeds to step 408, in which opening of the door is initiated by sending a signal to actuator 110 to provide the drive determined by drive curve 250 to the door 20. After door opening has been initiated the sequence proceeds to step 410, in which the control unit 102 checks for obstacles via proximity sensor 116 again, and then on to step 412, in which the control unit checks whether or not the door is fully open via the sensor provided in actuator 110. If it is detected that either there is an obstacle in the path of door 20 or the door 20 is fully open the sequence stops movement of the door and ends at step 416. If no obstacles are detected and the door is not fully open the sequence proceeds to step 414, in which the opening of the door is continued. The control unit continues opening the door until there is either an obstacle detected in step 410 or the door is determined to be fully open in step 412. In practice, the control unit 102 may continuously monitor for objects in the path of the door 20 before and during the opening sequence, and the drive curve 250 may be configured to stop providing any drive when the door reaches its fully open position.

The skilled person will understand that a similar sequence would also be used when closing the door 20.

In some examples, one or more contact sensors or proximity sensors having very short range, for example capacitive sensors or resistive contact sensors, may be provided at one or more edges 24 of the door 20 or on the body of the vehicle near the edges of the opening that the door is configured to cover. Such contact sensors may be particularly useful in detecting objects that are located between the door and the opening when the door is nearly closed, which the objects are at risk of being trapped if the door continues to close. If such sensors are provided then steps 406 and 410 of opening sequence 400, and the corresponding steps of the closing sequence (not shown in the drawings), may additionally comprise checking for objects in contact with the contact sensors. Indeed, if an object is detected by a contact sensor or a short range proximity sensor then in some examples the system may be configured to stop the door and then reverse the direction of movement of the door for a short distance after the detection of an object by the contact sensor or the short range proximity sensor.

It will be understood that throughout the scope of the present application the mass of the door is considered to include the mass of other parts that are disposed on the door and that will move with the door when it is opened, for example a spare wheel. Accordingly, sensor 104 may measure the mass of at least a portion of the door by measuring the mass that is disposed on or in spare wheel carrier 18. It will be understood that in many examples the mass of the door not including that disposed on or in the spare wheel carrier is likely to remain substantially constant, so it may not be necessary to measure the mass of the entire door. However, it is envisaged that the door 20 may be replaceable, for example with an armoured door which may be significantly heavier than the standard non-armoured door. Accordingly, in some examples the mass sensor 104 may be provided at a location that allows it to measure the overall mass of the door. For example, the mass sensor may be integrated within one or both hinges 22.

Although the examples described above show sensors 104, 118 to measure the mass and orientation of the vehicle, it will be understood that other vehicle parameters would also be suitable. For example, in one example one or more sensors may be provided to measure position and angular velocity of the door 20. In this example the controller 102 may comprise a feedback controller, optionally a PID (proportional-integral-derivative) controller, configured to maintain the angular velocity and/or angular acceleration of the door 20 within a target range during at least the acceleration and steady phase of the opening or closing of the door.

In some examples of the invention, one or more sensors are provided to measure vehicle speed. In this way, the appropriate force provided by the actuator may be determined in dependence on a measured value of the speed of the vehicle. For example, if the vehicle is moving forwards when an instruction to close a vertically hinged side door of the vehicle is received, then less force may be required to be provided by the actuator because closing of the door is assisted by the motion of the vehicle, i.e. movement of the vehicle urges the door toward the closed position such that the actuator need not exert such a large force as compared to when the vehicle stationary in order close the door in the same amount of time as when the vehicle is stopped.

In accounting for the vehicle speed in this way, the system compensates for the inertial mass of the door and ensures proper opening and closing operation when the vehicle is in motion. Furthermore, the system may provide a consistent user experience by, for example, ensuring that the time taken to open or close the vehicle doors remains constant regardless of the situation.

In another example of the invention, one or more sensors are provided to measure the environmental temperature external to the vehicle, i.e. the ambient temperature of the vehicle's surroundings. In this way, the appropriate force provided by the actuator may be determined in dependence of the measured value of the temperature of the environment. The temperature of the environment may affect various components of the system, in particular hydraulic components such as the hydraulic linear actuator in which a change in temperature results in a change in the force exerted by the actuator for a given input. The inclusion of temperature sensors in the system 100 thus allows for the compensation of temperature effects in these components and ensures a smooth and predictable opening/closing action of the vehicle door at different environmental temperatures.

### Power Assist System with Assistive Force

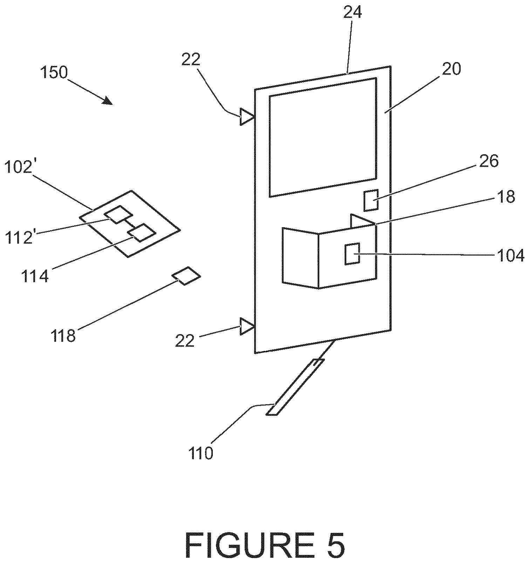

Figure 5 shows a power assist system in an embodiment of the present invention which is configured to adapt the force required to be provided by a user when opening and/or closing a door of a vehicle. It will be apparent that many of the components of the power assist system shown in figure 5 may be the same or similar to the components shown in the powered door opening and closing system of figure 2. Indeed, the skilled person will understand from the following description that it would be possible to provide the power assist system of the present embodiment in addition to the powered door opening and closing system described above simply by providing additional instructions in the electronic memory 112 of the control unit 102 and by the addition of handle 26, although other optional modifications will also be apparent. Accordingly, components that may be common to both systems have been marked with the same reference numerals, and components which are modified in the power assist system have been marked with the same reference numeral albeit with a superscript dash (').

The system 150 shown in figure 5 is configured to assist a user in opening or closing the door 20. A user wishing to open the door may grip the handle 26 to unlatch the door in the conventional manner. However, in addition to the capability to unlatch the door, handle 26 is provided with at least one sensor configured to detect the force that is applied to the handle by the user, which sensor is in communication with the control unit 102'. Control unit 102' is configured to instruct actuator 110 to provide an assistive force in the same direction as the resultant force applied by the user and in dependence on the magnitude of the resultant force applied by the user. In some embodiments the control unit 102' may instruct the actuator 110 to apply a force that is directly proportional to that applied by the user, although it will be understood that it may be desirable for the relationship to be non-linear in some embodiments.

Under certain circumstances, for example if a user is attempting to open a heavy vertically-hinged rear door of a vehicle that is in a nose-up orientation, the weight of the door may act to move it in the same direction that the user wishes to move the door in, but at a higher velocity. This may cause the actual force applied by the user to the handle to be in the opposite direction to the direction of movement of the door. Accordingly, control unit 102 may instruct actuator 110 to apply an assistive force in the opposite direction to the direction of movement. This may allow a user to maintain a controlled velocity of the door without requiring the user to apply a large force to the door, thereby preventing the door from running towards or away from the user under the effect of gravity.

The relationship between the force provided by the user and the assistive force that the control unit 102' instructs the actuator 110 to provide is further dependent on the output of one or more additional sensors that communicate with the control unit 102'. In the illustrated embodiment the control unit 102' communicates with a tilt sensor 118 and a mass sensor 104. The mass sensor may be configured to determine the mass of either the entire door or the mass attached to a portion of the door such as a spare wheel carrier. As such, the mass sensor 104 may be essentially the same as the mass sensor 104 described in relation to figure 2. The tilt sensor 118 may also be similar to the tilt sensor described in relation to the powered opening and closing system shown in figure 2. The control unit 102 may, for example, determine a constant of proportionality between the force applied by the user and the assistive force that actuator 110 is instructed to provide based upon the measured mass and orientation values. Such a constant of proportionality may be determined from a look-up table relating measured mass and orientation values to the required constant of proportionality.

In embodiments of the invention, one or more sensors are provided to measure vehicle speed. In this way, the appropriate force provided by the actuator may be determined in dependence on a measured value of the speed of the vehicle. For example, if the vehicle is moving forwards when the user begins to close a vertically hinged side door of the vehicle is received, then less force may be required to be provided by the actuator because closing of the door is assisted by the motion of the vehicle, i.e. movement of the vehicle urges the door toward the closed position such that the actuator need not exert such a large force as compared to when the vehicle stationary in order to assist in closing the door with the same amount of force required from the user and in the same amount of time as when the vehicle is stopped.

In accounting for the vehicle speed in this way, the system compensates for the inertial mass of the door and ensures proper opening and closing operation when the vehicle is in motion. Furthermore, the system may provide a consistent user experience by, for example, ensuring that the time and effort required to open or close the vehicle doors remains constant regardless of the situation.

In another embodiment of the invention, one or more sensors are provided to measure the environmental temperature external to the vehicle, i.e. the ambient temperature of the vehicle's surroundings. In this way, the appropriate force provided by the actuator may be determined in dependence of the measured value of the temperature of the environment. The temperature of the environment may affect various components of the system, in particular hydraulic components such as the hydraulic linear actuator in which a change in temperature results in a change in the force exerted by the actuator for a given input. The inclusion of temperature sensors in the system thus allows for the compensation of temperature effects in these components and ensures a smooth and predictable opening/closing action of the vehicle door at different environmental temperatures.

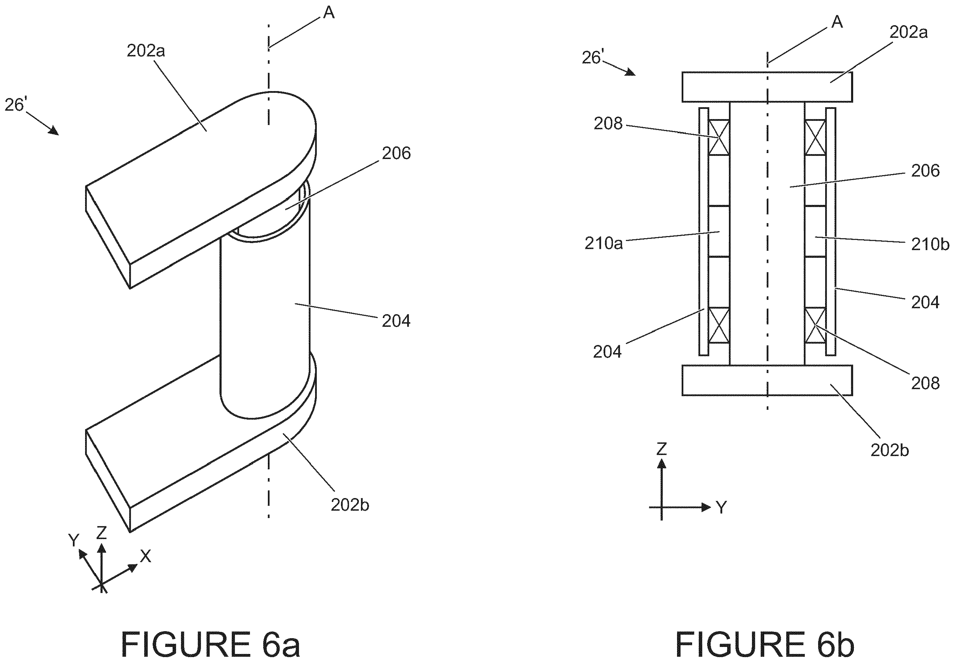

The force applied to the handle 26 may be measured by various known methods. For example, the handle may be connected to a linear or torsional spring, and a sensor may be provided to measure displacement of the handle away from a neutral position thereof, the neutral position being the position of the handle relative to the door when there is no resultant force on the handle. Alternatively, force transducers may be provided on the handle. In this case it may be necessary to provide more than one force transducer so that the resultant force in the direction that the door is able to move can be determined. A specific embodiment of a handle that may be suitable for use in the power assist system with assistive force provided by the present invention is described below with respect to figures 6a and 6b. However, the skilled person will recognise that other handle arrangements would also be suitable.

Figure 6a shows a handle 26' for a vertically-hinged door of a vehicle, the normal orientation of the handle having the z axis on the coordinate system shown in figure 6 arranged substantially vertically.

Handle 26' comprises upper and lower portions 202a, 202b connected by cylindrical portion 206 to form a loop that may be gripped by a user of the handle. A sleeve 204 is rotatably mounted on cylindrical portion 206. Handle 26' may be mounted on a door 20 of a vehicle and arranged so that movement of handle 26' away from a neutral position thereof may open a latch arrangement (not shown) that would otherwise hold door 20 in a closed position. Once the latch is open a user may be able to move the door to a desired position by applying a force to handle 26'. Advantageously, the mounting of sleeve 204 on cylindrical portion 206 may allow the user to move the door through a large angle without adjusting their grip, as the adjustment to the user's grip that would otherwise be required is accommodated by rotation of sleeve 204.

Figure 6b shows a cross section of handle 26' taken on the z-y plane. Sleeve 204 is mounted on cylindrical portion 206 via cylindrical bearings 208, thereby allowing sleeve 204 to rotate relative to cylindrical portion 206. Two load cells 210a, 210b are also provided between sleeve 204 and cylindrical portion 206. The load cells 210a,b are arranged to detect the force applied by a user to the sleeve 206. The detected force is converted to an electrical signal that is transmitted to controller 102.

Using the force applied by the user to determine the force to be supplied by actuator 110 has the advantage that the reaction force between the user's hand and the handle is likely to depend on both the speed at which the user wants the door to open and the force due to gravity on the door. Accordingly, an assistive force may be provided in the same direction as the resultant force measured by load cells 210a,b, and the level of assistive force may increase with increasing resultant force as described above.

It will be understood that load cells 210a, 210b measure forces in opposite directions to each other. The sensors may be operable to measure forces in two opposite directions that are substantially normal to the plane of the door. Accordingly, the resultant force measured by the load cells and used to determine the drive force to be applied by actuator 110 may be taken to be the larger of the two measured forces, less the smaller of the two measured forces.

The system shown in figure 5 provides a power assist system that may be suitable for use with vertically-hinged doors of vehicles that include one or more additional components such as a spare wheel, or with doors that are especially heavy, for example armoured doors. The system provides an assistive force which may reduce the force needed to open or close the door, which may improve convenience for users of the vehicle. In some embodiments mass sensor 104 may be omitted if the door 20 does not include an attachment point for an additional component such as a spare wheel, so the relationship between the force provided by the user and the assistive force provided by actuator 110 may be determined on the basis of the tilt values alone. This embodiment may be especially useful for armoured vehicles, as the doors of such vehicles are often significantly heavier than the doors fitted to conventional vehicles, but it may be unnecessary to determine the current mass of the door as this may be unlikely to change significantly.

### Assist System with Adaptive Damping

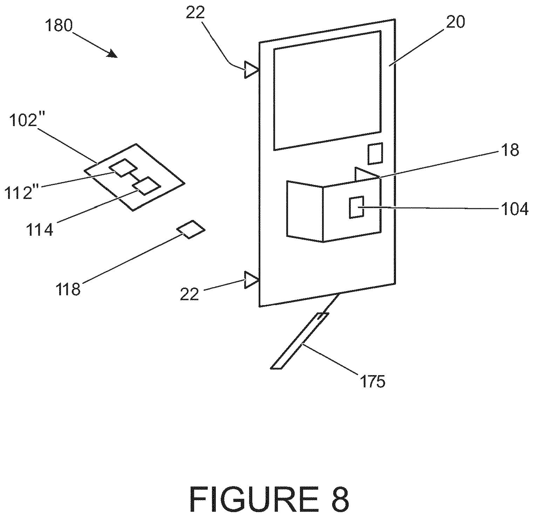

Figure 8 shows an embodiment of the invention which provides an assist system 180 that is configured to manage the force required to open a vertically hinged door of a vehicle by providing adaptive damping. It will be apparent that many of the components of the assist system with adaptive damping shown in figure 8 may be the same or similar to the components shown in the power assist system with assistive force shown in figure 5. Indeed, the skilled person will understand from the following description that it would be possible to provide the assist system with adaptive damping of the present embodiment in addition to either the powered door opening and closing system described above in relation to figure 2 or the power assist system with assistive force described above in relation to figure 5 simply by providing additional instructions in the electronic memory 112" of the control unit 102" and by the addition of adaptive damper 175, although other optional modifications will also be apparent. Accordingly, components that may be common to the power assist system with assistive force and the assist system with adaptive damping have been marked with the same reference numerals, and components which are modified in the assist system with adaptive damping have been marked with the same reference numeral albeit with an additional superscript dash (e.g. ").

In the embodiment illustrated in figured 8 the control unit 102" is configured to control the adaptive damper 175 to alter the damping that it provides in dependence on the mass of the door and the orientation of the vehicle as measured by sensors 104, 118. In some embodiments the adaptive damper 175 may be a Newtonian dashpot being configurable to adapt the damping coefficient that it provides in dependence on an input from control unit 102". However, the skilled person will understand that non-Newtonian damping may also be employed.

In some embodiments, the control unit 102" may instruct the adaptive damper 175 to provide a relatively low damping coefficient when the orientation of the vehicle is approximately level and the measured mass of the door is relatively low, because the risk of the door falling under the effect of gravity is very low when the vehicle is level and the force required to be provided by the user to stop the door once it is in motion may also be relatively low due to the relatively low mass of the door. If the sensor 104 detects that the mass of the door is relatively high, for example because a heavy spare wheel is attached to spare wheel carrier 18, then the control unit 102" may instruct the adaptive damper 175 to provide an increased damping coefficient. This may improve convenience for a user of the vehicle when bringing the door to a controlled stop, as the increased damping coefficient will provide additional force to assist a user of the vehicle when bringing the door to a stop, which may help to overcome the increased inertia of the door caused by its increased weight. The damping coefficient provided by adaptive damper 175 may be further increased when the orientation of the vehicle as detected by tilt sensor 118 is determined to be non-level. This may reduce a risk of the door opening and/or closing at high speed under the effect of gravity.

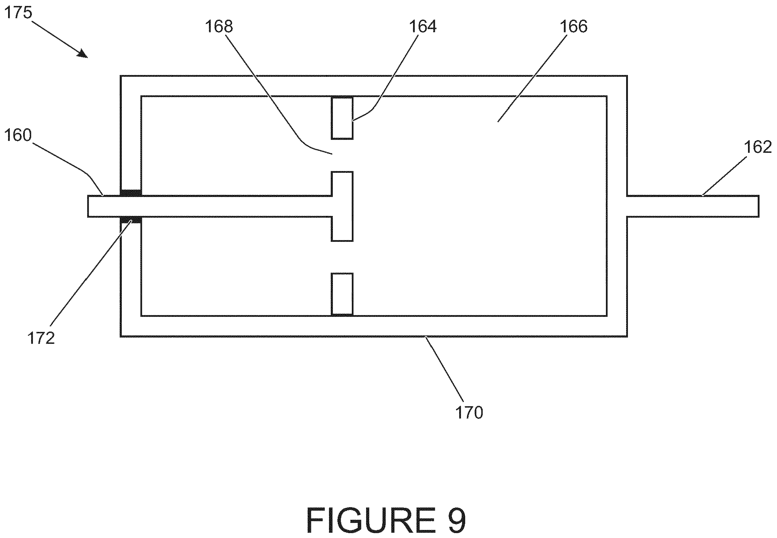

An adaptive damper 175, which may be used in embodiments of the present invention is shown in figure 9 in cross-section. Adaptive damper 175 is a dashpot device with a variable damping properties, the actuator being configured to change its damping properties in dependence on a signal from controller 102", as described above. Adaptive damper 175 comprises a fluid-filled chamber 170 having piston 160 attached to paddle 164 disposed therein. Paddle 164 has a plurality of orifices 168 therein to allow damping fluid 166 to pass from one side of the paddle 164 to the other as piston 160 moves relative to chamber 170. A seal 172 is provided between the piston 160 and the chamber 170. Piston 160 may be attached to door 20 and chamber 170 may be attached to a fixed part of the vehicle (not shown) at end 162. A hinge may be provided at one or both ends of adaptive damper 175 to allow a change in the angle between the actuator and one or both of the door and the fixed part of the vehicle.

The skilled person will understand that various methods exist for varying the damping provided by adaptive damper 175. For example, electronically controlled valves may be provided to adjust the area of orifices 168 or to selectively cover some or all of the orifices 168. Such valves may be operable to provide a hydraulic lockout function by substantially covering all of the orifices 168, thereby substantially preventing relative movement between the piston 160 and the chamber 170. Furthermore, a partial lockout function may be provided by covering all but a small portion of orifices 168, thereby providing a very large damping coefficient and a high resistance to movement of the door 20.

In one embodiment, fluid 166 may comprise a magnetorheological fluid having a plurality of magnetic particles suspended therein, and an electromagnet (not shown) may be provided in the vicinity of chamber 170 so that a magnetic field may be selectively applied across the chamber 170. The magnetic field provided by the electromagnet may be controlled by the control unit 102". In this way the control unit may be operable to adjust the viscosity of the fluid 166 by varying the current across the electromagnet. Use of a magnetorheological fluid may allow increased control over the damping properties, because it may be possible to control the applied magnetic field in a substantially continuous manner. A dashpot system for vehicle suspension systems employing a magnetorheological fluid is currently available from Delphi Automotive Corporation under the trade name MagneRide™.

It will be understood that magnetorheolgical adaptive dampers as described above may be useful in other systems for providing adaptive damping to vehicle doors. For example, a magnetorheological damper may be used to provide a door with user-selectable damping properties.

### Door

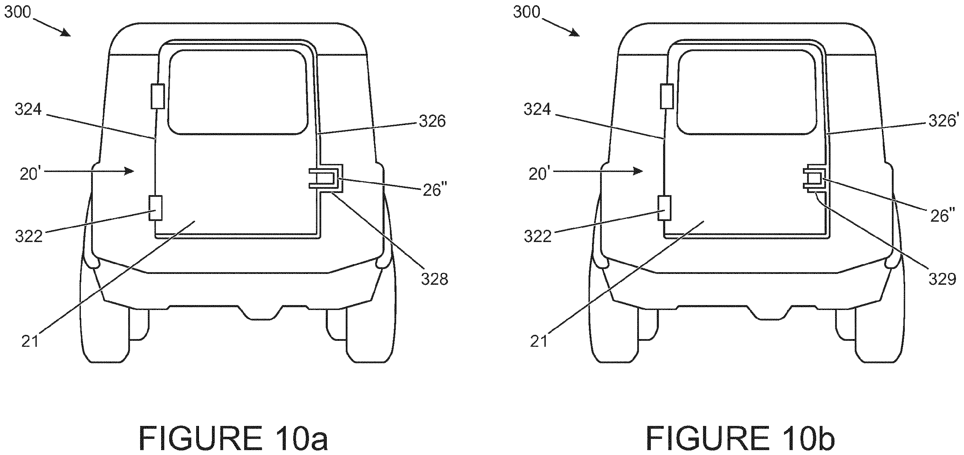

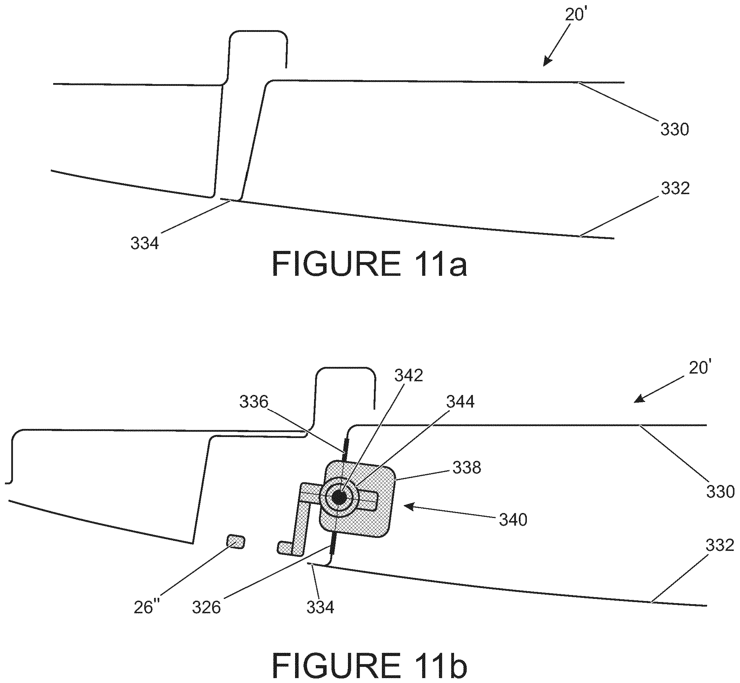

Figures 10 and 11 illustrate a door, specifically a vertically-hinged door, in accordance with an embodiment of the present invention. The door shown in figures 10 and 11 may be used in conjunction with any or all of the afore-described power assist system with assistive force, the assist system with adaptive damping and the powered door opening and closing system, as will become apparent to the skilled person from the following description.

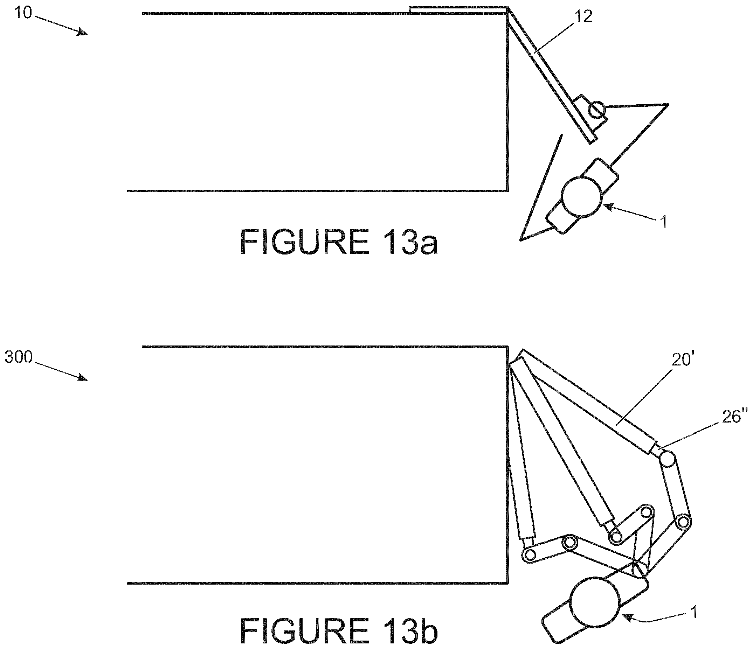

Figures 10a, 10b and 13b show a vehicle 300 including a vertically-hinged door 20' comprising a closure member 21, which is configured to substantially cover an opening in the vehicle 300, and a handle 26". Door 20' is attached to the vehicle at a first end 324 via hinges 322 on closure member 21, which hinges allow the door 20' to rotate relative to the vehicle about a vertical axis, but substantially prevent rotation about non-vertical axes. The door further comprises a handle 26" disposed near second end 326 of the closure member 21 so that a portion of the handle 26" extends beyond the second end 326 and outside the footprint of the closure member 21. In figure 10a the second end 326 comprises a straight edge, and the handle 26" extends beyond the straight edge of the door. A recess 328 is provided in the vehicle body to accommodate the handle when the door is closed. In contrast to figure 10a, figure 10b shows a non-straight second end 326", which includes a recess 329. A recess in the vehicle body could be provided in addition to the recess 329 in the closure member 21. This may make the handle 26" more accessible when the door is closed.

In both figure 10a and figure 10b the handle extends beyond the second end 326,326", and a portion of the handle is outside the footprint of the closure member 21. Because a portion of handle 26" extends outside the footprint of the closure member 21 it is more accessible when the door is open compared to the prior art handle shown in figure 13a. This is because a user may be able to grip the handle 26" when standing on either side of the open door 20'. Furthermore, as shown in figures 13a and 13b, when a user opens the door of a vehicle the angle between the door handle and the user changes, which may make it difficult to grip prior art handles comfortably throughout the movement of the door, as a portion of the door may come between the user and the handle. The door of the embodiment of the present invention shown in figure 13b eliminates this problem, because the handle 26" protrudes outside the footprint of the closure member 21. Furthermore, in some embodiments the handle 26" may be provided with a rotating sleeve, similar to the cylindrical sleeve 204 shown in figure 6. This sleeve may accommodate the required rotation of a user's grip relative to the handle 26, so that it is not necessary for the user to adjust their grip as the door is opened. Thus, in the presently described embodiment, the handle delivers a more ergonomic handle that provides the user with various grip options, and further allows the user to grip the handle using either hand.

Figure 11b shows a horizontal cross section through door 20' and handle assembly 340, which includes handle 26". Closure member 21 comprises two panels 330, 332 that are connected together at end 334 and define a cavity therebetween. Panel 330 includes an aperture in which handle assembly 340 is located. A seal 336 is provided between handle assembly 340 and panel 330 to prevent ingress of water or dirt into the cavity between the panels 330, 332.

Handle assembly 340 comprises a housing 338 which is rigidly connected to panel 330. Housing 338 is connected to handle 26" at pivot 342, which allows the handle 26" to be rotated away from a neutral position in either a clockwise direction or an anticlockwise direction. A spring 344 is provided to bias handle 26" into its neutral position relative to housing 338, and therefore relative to the rest of door 20'. Spring 344 also provides a resistive force that acts to return the handle 26" to its neutral position when the handle 26" is moved away from the neutral position.

When the handle 26" is in its neutral position and the door 20 is closed a latch (not shown) is provided that holds the door in its closed position. If the door 20 is unlocked then a user of the vehicle may be able to open the door by displacing the handle 26" away from its neutral position to open the latch and allow the door to pivot relative to the rest of the vehicle. In addition to being operable to open a latch that holds the door in its closed position handle 26" may provide a "dead man's handle" functionality by reducing the resistance to movement of the open door when the handle 26" is displaced away from its closed position and providing an increased resistance when the handle is in its neutral position. This allows the door to move easily when the user applies a force to displace the handle, but may maintain the door in the position the user left it in when they stopped applying force to the handle.

The skilled person will understand that various conventional means could be used to allow the handle assembly 340 to open a latch when the handle 26" is displaced away from its neutral position. For example, the handle may be configured to displace a locking part of the latch arrangement from a position in which it prevents opening of the door to a position in which it allows opening of the door when the handle 26" is displaced away from its neutral position. The skilled person will further understand that various means could be used to provide increased resistance to movement of the door 20 when the handle 26" is in its neutral position and the door is in an open position. For example, a hydraulic lockout may be provided on a piston that connects the door 20 to the vehicle body. Such a piston may have a similar construction to that shown in figure 9, and may comprise a paddle 164 having a plurality of selectively coverable holes 168 disposed in a cylinder 170 filled with hydraulic fluid 166. In normal operation when the handle 26" is displaced away from its neutral position such a strut may provide damping to the motion of the door relative to the vehicle. However, when the handle is in its neutral position some or all of the selectively coverable holes may be covered, thereby significantly restricting or preventing the passage of hydraulic fluid from one side of the paddle to the other and providing a partial or complete hydraulic lockout. This may either substantially prevent movement of the door 20' or provide increased resistance to the movement of door 20' when the handle 26" is in its neutral position.

In some embodiments the handle 26" may be used as part of an assist system with assistive force as described above in relation to figure 5. For example, in an assist system in which an assistive force related to the force applied by the user is applied to the door by the assist system, the handle 26" may be used to determine the force that has been applied by the user. The force applied by the user may be proportional to the angular displacement of the handle 26" and the spring rate of spring 344 (i.e. the amount of force required to deflect spring 344 by a unit distance).

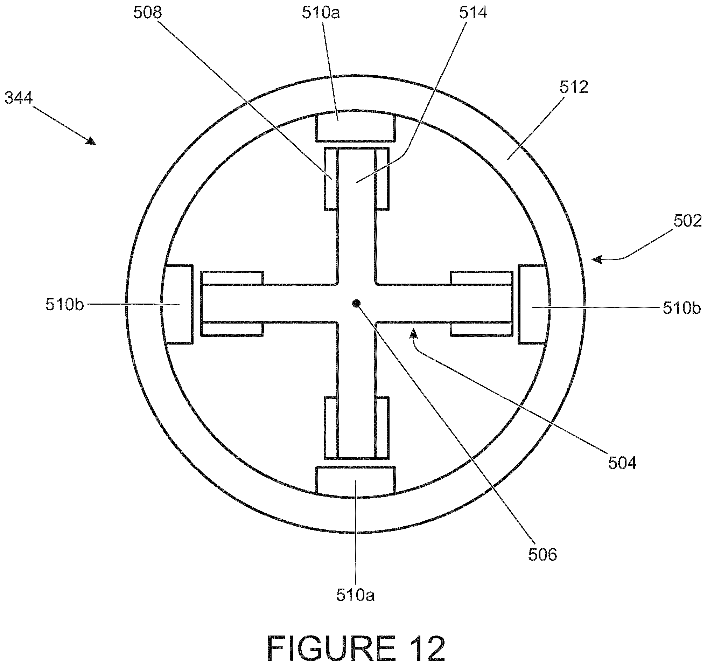

An embodiment of spring 344 which may be operable to both bias handle 26" towards its neutral position and detect movement of handle 26" away from its neutral position is shown in figure 12. Figure 12 shows a magnetic spring 344 having a stator part 502 which is connected to housing 338 and rotor part 504 which is connected to handle 26". Stator part 502 comprises a back iron 512 having four permanent magnets 510a, 510b attached thereto. Each of magnets 510a have the same polarity and each of magnets 510b have the same polarity, so that the polarity of the magnets alternates around the circumference of stator part 502. Rotor part 504 is journaled for rotation about centre 506 and comprises four teeth 514 each having a coil 508 wound therearound. Magnetic spring 344 is shown in its neutral position in figure 12, with permanent magnets 510 substantially aligned with teeth 514. When handle 26" is rotated away from its neutral position rotor part 504 is also rotated, which causes misalignment between teeth 514 and permanent magnets 510. This increases the reluctance of the magnetic flux paths that include adjacent magnets 510a,b, adjacent rotor teeth 514 and the parts the back iron 512 between adjacent magnets 510a,b. A torque therefore exists between the stator and the rotor in a direction that acts to cause the rotor to return to its neutral position.

Displacement of the rotor 504 away from its neutral position also induces a current in coils 508, because the magnetic flux passing through teeth 514 changes when the rotor part 504 is displaced. The magnitude of the current induced in coils 508 may be indicative of the magnitude and direction of the movement of the rotor 504 away from its neutral position. Referring back to figure 5, the magnitude and direction of the displacement of handle 26" away from its neutral position may be communicated to control unit 102', which may instruct actuator 110 to provide a force to the door 20 in dependence on the magnitude of the displacement of the handle 26" away from its neutral position, and optionally also in dependence on the mass of the door as measured by mass sensor 104 and/or in dependence on the measured orientation of the vehicle as measured by tilt sensor 118. It will be understood that the rotor part 504 shown in figure 12 may be prevented from rotating by more than about +/- 45 degrees away from the neutral position by a mechanical stop (not shown). This prevents the rotor from becoming stable at a position rotated by 90 degrees relative to that shown in figure 12. Furthermore, although four teeth 514 and permanent magnets 510 are shown in figure 12, the skilled person will understand that other numbers of magnets and teeth would also be suitable.

Although the door described above comprises a handle that is operable to move away from a neutral position in two opposite directions, it will be understood that other configurations of handle would also be suitable, provided a portion of the handle extends beyond the second end of the closure member. For example, a handle which is fixed relative to the closure member but which comprises force transducers could be employed. Such a handle may have a similar construction to that shown in figures 6a and 6b, and may be rigidly connected to the door. In this event, the latch that holds the door in its closed position may be opened upon detection by the force transduces of a force above a threshold value. A handle provided with force transducers could provide "dead man's handle" functionality by reducing the resistance to movement of the open door when the force transducers detect a force above a threshold value and providing an increased resistance when the force detected is below the threshold value. Furthermore, the force transducers may provide an output indicative of the magnitude and direction of the force applied to the handle by a user's hand, which may be used as an input to an assist system with assistive force as described above in relation to figure 5.

### Actuators

Figure 7 shows an alternative actuator 110' which may be used in the powered door opening and closing system described above in relation to figure 2 and/or the power assist system with assistive force described above in relation to figure 5. Actuator 110' comprises a motor 130 and a cable assembly 111. The motor 130 is configured to apply tension to cable 134, thereby to apply a force to the hinge 22 of door 20 to open or close door 20. Cable 134 is directed from motor 130 to hinge 22 and maintained in tension by rollers 136. The embodiment shown in figure 7 has the advantage that the motor 130 can be located away from door 20. This is advantageous because space near the door 20 is typically very limited due to packaging requirements. The actuator could alternatively be located within a cavity in the door 20, but this would increase the weight of the door, which is generally undesirable. Although the cable 134 is shown connected to the hinge 22 in figure 7, the skilled person will understand that it could alternatively be connected to the door 20.

The actuator shown in figure 7 has the disadvantage that it can only be used to move the door in one direction (i.e. opening only or closing only). Depending upon the requirements of the system, this limitation may be acceptable. Alternatively, two actuators 110' may be provided, one to open the door 20 and one to close the door 20. The cable 134 is maintained in tension by a return spring in the attachment between motor 130 and cable 134, which causes any slack created if the door is moved to be taken up. An alternative actuator (not shown) could have the cable 134 as a closed loop system on a single motor 130 which could enable the door 20 to be opened or closed by a single reversible actuator 110'.

Although the actuator 110' shown in figure 7 has been described in relation to its application in a power system for opening and closing a vertically-hinged door having a sensor system for determining the orientation of the vehicle to determine the level of drive required, it may also be used in other applications. For example, it may be advantageous to use the actuator 110' in a power close system for a horizontally-hinged tailgate of a vehicle, as similar packaging limitations may apply to both a horizontally-hinged tailgate and a vertically-hinged door. Indeed, the limitation that the actuator 110' may only move the door in one direction may be less significant for a power system for a horizontally-hinged tailgate of a vehicle, because such a system may only be required to close the tailgate. The tailgate may be opened automatically by a compressed gas strut or a spring that is arranged to cause the tailgate to open once a latch securing it in its closed position has been opened.

Figure 14 shows a hydraulic system that provides a hydraulic linear alternative actuator 110" that is also operable to provide adaptive damping. The actuator 110" may be used in conjunction with any or all of the powered door opening and closing system described above in relation to figure 2, the power assist system with assistive force described above in relation to figure 5 and the assist system with adaptive damping described in relation to figure 8. Actuator 110' is similar to the adaptive damper 175 shown in figure 9 and may provide a similar adaptive damping function. However actuator 110" also includes additional passages 182, 184 to connect the damping fluid on either side of the paddle 164 to bi-directional pump 181. Pump 181 is operable to increase the pressure on one side of paddle 164 relative to the other, thereby to cause a resultant force to act on paddle 164, which force is transmitted to the door 20' via piston 160.

The skilled person will understand that the actuators for opening doors described herein may provide either a linear force to a portion of the door, a torque, or a combination of the two. Throughout the present application references to driving a door and variations thereof are considered to include any application of force or torque (or combination thereof) that is applied by an actuator.

It will be appreciated that throughout the present application the terms "horizontal" and "vertical" refer to orientations of components in their normal use on level ground. Furthermore, their use throughout this specification is only intended to specify the approximate orientation in normal use. Accordingly, to be considered "vertically-hinged" or "horizontally-hinged" within the meaning of the present specification it is not necessary for the rotation axis of the hinges to be precisely horizontal or vertical.

It will be appreciated that various changes and modifications can be made to the present invention without departing from the scope of the appended claims.

## Claims

1. An assistance system (150) for adjusting the force required to be provided by a user to open and/or close a vertically-hinged door (20) of a vehicle (10), the system comprising:
at least one sensor configured to measure at least one vehicle parameter; and
an actuator (110) configured to adjust the force required to open and/or close the door (20), wherein the system (150) comprises a control means (102') configured to control the actuator (110) to adjust the force required to open and/or close the door (20) in dependence on said vehicle parameter,
**characterised in that**:
the at least one sensor comprises a mass sensor (104) and the at least one vehicle parameter comprises the current mass of at least a portion of the door (20).

2. An assistance system (150) as claimed in claim 1, wherein the at least one sensor comprises at least one of:
a tilt sensor (118) and the at least one vehicle parameter comprises a parameter relating to an orientation of the vehicle (10);
a position sensor and/or a velocity sensor and the at least one vehicle parameter comprises the current angular velocity of the door (20);
at least one force transducer disposed on a handle (26) of the door (20), and the at least one vehicle parameter comprises a value of a force applied to the handle (26) by a user of the vehicle (10);
a temperature sensor and the at least one vehicle parameter comprises a temperature external to the vehicle (10); and
a vehicle speed sensor and the at least one vehicle parameter comprises the speed of the vehicle (10).

3. An assistance system (150) as claimed in claim 2, wherein the parameter relating to an orientation of the vehicle (10) comprises any one or more of: an absolute value of the orientation of the vehicle (10) about a roll axis; and an absolute value of the orientation of the vehicle (10) about a pitch axis.

4. An assistance system (150) as claimed in any preceding claim, wherein the actuator (110) comprises an adaptive damper (175) and the control means (102') is configured to adjust the damping properties of said adaptive damper (175), thereby to adjust the force required to open and/or close the door (20).

5. An assistance system (150) as claimed in claim 4, wherein the control means (102') is configured to increase the damping properties of said adaptive damper (175) when the current mass of at least a portion of the door (20) exceeds a threshold value.

6. An assistance system (150) as claimed in any preceding claim, wherein the actuator (110) is configured to apply a force and/or a torque to the door (20), and the control means (102') is configured to adjust the force and/or torque provided by the actuator (110) in dependence on the value of the vehicle parameter, to thereby adjust the force required to open and/or close the door (20).

7. An assistance system (150) as claimed in claim 6 when dependent from claim 2, wherein the at least one vehicle parameter comprises at least one of a parameter relating to an orientation of the vehicle (10) and a current mass of at least a portion of the door (20), whereby an amount of force and/or torque provided by the actuator (110) is determined in dependence on the force applied to the handle (26) by the user of the vehicle (10) and at least one of the parameter relating to an orientation of the vehicle (10) and the current mass of at least a portion of the door (20).

8. An assistance system (150) as claimed in claim 7, wherein the amount of force and/or torque applied by the actuator (110) is proportional to the force applied to the handle (26) by the user, and a constant of proportionality is determined in dependence on at least one of the parameter relating to an orientation of the vehicle (10) and the current mass of at least a portion of the door (20).

9. A method of adjusting a force required to be provided by a user to open and/or close a vertically-hinged door (20) of a vehicle (10), **characterised in that** the method comprises:
measuring at least one vehicle parameter, said at least one vehicle parameter comprising the current mass of at least a portion of the door (20); and
controlling an actuator (110) to adjust the force required to open the door (20) in dependence on the vehicle parameter.

10. A method as claimed in claim 9, wherein the actuator (110) is configured to apply a force or torque to the door (20), thereby to adjust the force required to open and/or close the door (20).

11. A method as claimed in claim 9 or 10, wherein the at least one vehicle parameter comprises at least one of:
a value of a force applied to the handle (26) by a user of the vehicle (10);
a parameter relating to an orientation of the vehicle (10).

12. A method as claimed in any of claims 9-11, wherein the actuator (110) comprises an adaptive damper (175) and the method comprises changing the damping properties of the adaptive damper (175), thereby to adjust the force required to open and/or close the door (20).

13. A controller (102') configured to implement a method as claimed in any of claims 9-12.

14. A vertically-hinged door (20) for a vehicle (10) comprising an assistance system (150) as claimed in any of claims 1-8.

15. A vehicle (10) comprising any one of: an assistance system (150) as claimed in any of claims 1-8; a controller (102') as claimed in claim 13; or a door as claimed in claim 14.

## Patentansprüche

1. Assistenzsystem (150) zum Einstellen der Kraft, die ein Benutzer zum Öffnen und/oder Schließen einer Tür (20) mit vertikalem Türanschlag eines Fahrzeugs (10) aufbringen muss, wobei das System umfasst:
mindestens einen Sensor, der zum Messen mindestens eines Fahrzeugparameters konfiguriert ist; sowie
ein Stellglied (110), das zum Einstellen der zum Öffnen und/oder Schließen der Tür (20) erforderlichen Kraft konfiguriert ist, wobei das System (150) eine Steuereinrichtung (102') umfasst, die zum Steuern des Stellgliedes (110) zum Einstellen der zum Öffnen und/oder Schließen der Tür (20) erforderlichen Kraft in Abhängigkeit von dem besagten Fahrzeugparameter konfiguriert ist, **dadurch gekennzeichnet, dass**:
der mindestens eine Sensor einen Massensensor (104) und der mindestens eine Fahrzeugparameter die aktuelle Masse von mindestens einem Teil der Tür (20) umfasst.

2. Assistenzsystem (150) nach Anspruch 1, wobei der mindestens eine Sensor mindestens eines der Folgenden umfasst:
einen Neigungssensor (118), wobei der mindestens eine Fahrzeugparameter einen Parameter umfasst, der sich auf die Ausrichtung des Fahrzeugs (10) bezieht;
einen Positionssensor und/oder einen Geschwindigkeitssensor, wobei der mindestens eine Fahrzeugparameter die aktuelle Winkelgeschwindigkeit der Tür (20) umfasst;
mindestens einen Kraftaufnehmer, der an einem Griff (26) der Tür (20) angeordnet ist, wobei der mindestens eine Fahrzeugparameter einen Wert einer Kraft umfasst, die von einem Benutzer des Fahrzeugs (10) auf den Griff (26) ausgeübt wird;
einen Temperatursensor, wobei der mindestens eine Fahrzeugparameter eine Temperatur außerhalb des Fahrzeugs (10) umfasst; sowie
einen Fahrzeuggeschwindigkeitssensor, wobei der mindestens eine Fahrzeugparameter die Geschwindigkeit des Fahrzeugs (10) umfasst.

3. Assistenzsystem (150) nach Anspruch 2, wobei der Parameter, der sich auf die Ausrichtung des Fahrzeugs (10) bezieht, eines oder mehrere der Folgenden umfasst:
einen Absolutwert der Ausrichtung des Fahrzeugs (10) um eine Längsachse; sowie
einen Absolutwert der Ausrichtung des Fahrzeugs (10) um eine Querachse.

4. Assistenzsystem (150) nach einem der vorhergehenden Ansprüche, wobei das Stellglied (110) einen adaptiven Dämpfer (175) umfasst und wobei die Steuereinrichtung (102') konfiguriert ist, um die Dämpfungseigenschaften des adaptiven Dämpfers anzupassen (175), um dadurch die zum Öffnen und/oder Schließen der Tür (20) erforderliche Kraft einzustellen.

5. Assistenzsystem (150) nach Anspruch 4, wobei die Steuereinrichtung (102') konfiguriert ist, um die Dämpfungseigenschaften des adaptiven Dämpfers (175) zu erhöhen, wenn die aktuelle Masse von zumindest einem Teil der Tür (20) einen Schwellenwert überschreitet.

6. Assistenzsystem (150) nach einem der vorhergehenden Ansprüche, wobei das Stellglied (110) konfiguriert ist, um eine Kraft und/oder ein Drehmoment auf die Tür (20) auszuüben, und wobei die Steuereinrichtung (102') konfiguriert ist, um die von dem Stellglied (110) bereitgestellte Kraft und oder das Drehmoment in Abhängigkeit von dem Wert des Fahrzeugparameters anzupassen, um dadurch die zum Öffnen und/oder Schließen der Tür (20) erforderliche Kraft einzustellen.

7. Assistenzsystem (150) nach Anspruch 6 in Abhängigkeit zu Anspruch 2, wobei der mindestens eine Fahrzeugparameter mindestens einen Parameter in Bezug auf die Ausrichtung des Fahrzeugs (10) und eine aktuelle Masse mindestens eines Teils der Tür (20) umfasst, wobei die Höhe der von dem Stellglied (110) bereitgestellten Kraft und/oder des Drehmoments in Abhängigkeit von der Kraft, die von dem Benutzer des Fahrzeugs (10) auf den Griff (26) ausgeübt wird, und mindestens einem der Parameter in Bezug auf die Ausrichtung des Fahrzeugs (10) und die aktuelle Masse von mindestens einem Teil der Tür (20) bestimmt wird.

8. Assistenzsystem (150) nach Anspruch 7, wobei die Höhe der von dem Stellglied (110) ausgeübten Kraft und/oder des Drehmoments proportional zu der Kraft ist, die von dem Benutzer auf den Griff (26) ausgeübt wird, wobei die Proportionalitätskonstante in Abhängigkeit von mindestens einem der Parameter in Bezug auf die Ausrichtung des Fahrzeugs (10) und die aktuelle Masse von mindestens einem Teil der Tür (20) bestimmt wird.

9. Verfahren zum Anpassen der Kraft, die von einem Benutzer zum Öffnen und/oder Schließen einer Tür (20) mit vertikalem Türanschlag eines Fahrzeugs (10) benötigt wird, **dadurch gekennzeichnet, dass** das Verfahren umfasst:
Messen mindestens eines Fahrzeugparameters, wobei der mindestens eine Fahrzeugparameter die aktuelle Masse mindestens eines Teils der Tür (20) umfasst; sowie
Steuern eines Stellglieds (110) zum Anpassen der zum Öffnen der Tür (20) in Abhängigkeit zu dem Fahrzeugparameter erforderlichen Kraft.

10. Verfahren nach Anspruch 9, wobei das Stellglied (110) konfiguriert ist, um eine Kraft oder ein Drehmoment auf die Tür (20) auszuüben, um dadurch die zum Öffnen und/oder Schließen der Tür (20) erforderliche Kraft anzupassen.

11. Verfahren nach Anspruch 9 oder 10, wobei der mindestens eine Fahrzeugparameter mindestens eines der Folgenden umfasst:
einen Wert einer Kraft, die von einem Benutzer des Fahrzeugs (10) auf den Griff (26) ausgeübt wird;
einen Parameter in Bezug auf die Ausrichtung des Fahrzeugs (10).

12. Verfahren nach einem der Ansprüche 9 bis 11, wobei das Stellglied (110) einen adaptiven Dämpfer (175) und das Verfahren das Anpassen der Dämpfungseigenschaften des adaptiven Dämpfers (175) umfasst, um dadurch die zum Öffnen und/oder Schließen der Tür (20) erforderliche Kraft einzustellen.

13. Steuereinrichtung (102'), die zum Implementieren eines Verfahrens nach einem der Ansprüche 9 bis 12 konfiguriert ist.

14. Tür (20) mit vertikalem Türanschlag für ein Fahrzeug (10), umfassend ein Assistenzsystem (150) nach einem der Ansprüche 1 bis 8.

15. Fahrzeug (10), umfassend eines der Folgenden:
ein Assistenzsystem (150) nach einem der Ansprüche 1 bis 8;
eine Steuereinrichtung (102') nach Anspruch 13; oder
eine Tür nach Anspruch 14.

## Revendications

1. un système d'assistance (150) pour ajuster la force requise à fournir par un utilisateur pour ouvrir et/ou fermer une porte à charnière verticale (20) d'un véhicule (10), le système comprenant :
au moins un capteur configuré pour mesurer au moins un paramètre du véhicule ; et
un actionneur (110) configuré pour ajuster la force requise pour ouvrir et/ou fermer la porte (20), dans lequel le système (150) comprend un moyen de commande (102') configuré pour commander l'actionneur (110) afin d'ajuster la force requise pour ouvrir et/ou fermer la porte (20) en fonction dudit paramètre du véhicule, **caractérisé en ce que** :
le au moins un capteur comprend un capteur de masse (104) et le au moins un paramètre du véhicule comprend la masse actuelle d'au moins une partie de la porte (20).

2. Système d'assistance (150) selon la revendication 1, dans lequel le au moins un capteur comprend au moins l'un des éléments suivants
un capteur d'inclinaison (118) et le au moins un paramètre du véhicule comprend un paramètre relatif à une orientation du véhicule (10) ;
un capteur de position et/ou un capteur de vitesse et le au moins un paramètre du véhicule comprend la vitesse angulaire actuelle de la porte (20) ;
au moins un capteur de force disposé sur une poignée (26) de la porte (20), et le au moins un paramètre du véhicule comprend une valeur d'une force appliquée à la poignée (26) par un utilisateur du véhicule (10) ;
un capteur de température et le au moins un paramètre du véhicule comprend une température externe au véhicule (10) ; et
un capteur de vitesse du véhicule et le au moins un paramètre du véhicule comprend la vitesse du véhicule (10).

3. Système d'assistance (150) selon la revendication 2, dans lequel le paramètre relatif à une orientation du véhicule (10) comprend un ou plusieurs des éléments suivants
une valeur absolue de l'orientation du véhicule (10) autour d'un axe de roulis ; et
une valeur absolue de l'orientation du véhicule (10) autour d'un axe de tangage.

4. Un système d'assistance (150) comme revendiqué dans toute revendication précédente, dans lequel l'actionneur (110) comprend un volet adaptatif (175) et le moyen de commande (102') est configuré pour ajuster les propriétés d'amortissement dudit amortisseur adaptatif (175), pour ajuster ainsi la force requise pour ouvrir et/ou fermer la porte (20).

5. Système d'assistance (150) selon la revendication 4, dans lequel le moyen de commande (102') est configuré pour augmenter les propriétés d'amortissement dudit amortisseur adaptatif (175) lorsque la masse actuelle d'au moins une partie de la porte (20) dépasse une valeur de seuil.

6. Système d'assistance (150) tel que revendiqué dans toute revendication précédente, dans lequel l'actionneur (110) est configuré pour appliquer une force et/ou un couple à la porte (20), et le moyen de commande (102') est configuré pour ajuster la force et/ou le couple fourni par l'actionneur (110) en fonction de la valeur du paramètre du véhicule, pour ajuster ainsi la force requise pour ouvrir et/ou fermer la porte (20).

7. Système d'assistance (150) selon la revendication 6 lorsqu'il dépend de la revendication 2, dans lequel le au moins un paramètre du véhicule comprend au moins l'un d'un paramètre relatif à une orientation du véhicule. (10) et une masse actuelle d'au moins une partie de la porte (20), dans lequel une quantité de force et/ou de couple fournie par l'actionneur (110) est déterminée en fonction de la force appliquée à la poignée (26) par l'utilisateur du véhicule (10) et d'au moins un des paramètres concernant une orientation du véhicule (10) et la masse actuelle d'au moins une partie de la porte (20).

8. Système d'assistance (150) selon la revendication 7, dans lequel la quantité de force et/ou de couple appliquée par l'actionneur (110) est proportionnelle à la force appliquée à la poignée (26) par l'utilisateur, et une constante de proportionnalité est déterminée en fonction d'au moins un des paramètres relatifs à une orientation du véhicule (10) et à la masse actuelle d'au moins une partie de la porte (20).

9. Procédé de réglage d'une force devant être fournie par un utilisateur pour ouvrir et/ou fermer une porte à charnière verticale (20) d'un véhicule (10), **caractérisé en ce que** le procédé comprend :
la mesure d'au moins un paramètre du véhicule, ledit au moins un paramètre du véhicule comprenant la masse actuelle d'au moins une partie de la porte (20) ; et
commander un actionneur (110) pour régler la force nécessaire à l'ouverture de la porte (20) en fonction du paramètre du véhicule.

10. Procédé selon la revendication 9, dans lequel l'actionneur (110) est configuré pour appliquer une force ou un couple à la porte (20), pour ainsi ajuster la force requise pour ouvrir et/ou fermer la porte (20).

11. Procédé selon la revendication 9 ou 10, dans lequel le au moins un paramètre du véhicule comprend au moins l'un des éléments suivants
une valeur d'une force appliquée à la poignée (26) par un utilisateur du véhicule (10) ; un paramètre relatif à une orientation du véhicule (10).

12. Procédé selon l'une quelconque des revendications 9 à 11, dans lequel l'actionneur (110) comprend un amortisseur adaptatif (175) et le procédé comprend la modification des propriétés d'amortissement de l'amortisseur adaptatif (175), pour ajuster ainsi la force requise pour ouvrir et/ou fermer la porte (20).

13. un contrôleur (102') configuré pour mettre en oeuvre une méthode telle que revendiquée dans l'une quelconque des revendications 9 à 12.

14. Porte à charnière verticale (20) pour un véhicule (10) comprenant un système d'assistance (150) tel que revendiqué dans l'une quelconque des revendications 1-8.

15. Véhicule (10) comprenant l'un quelconque des éléments suivants : un système d'assistance (150) comme indiqué dans l'une quelconque des revendications 1-8 ; un contrôleur (102') comme indiqué dans la revendication 13; ou une porte comme indiqué dans la revendication 14.
